# EUROPEAN PATENT APPLICATION

(11) **EP 4 765 831 A1**
(43) Date of publication of application: **24.06.2026**
(21) Application number: 23952344.2
(22) Date of filing: 14.09.2023
(51) Int. Cl.: H04N 21/431, H04N 21/478, H04N 21/45, H04N 5/45

(54) **MULTIMEDIA DEVICE AND CONTROL METHOD THEREFOR**

(71) Applicant: LG Electronics Inc., Yeongdeungpo-gu Seoul 07336 (KR)
(72) Inventor: MIN, Jeongeun, Seoul 06772 (KR)
(74) Representative: Schott, Jakob Valentin
(86) International application number: PCT/KR2023/013770
(87) International publication number: WO 2025/058104

(57) **Abstract**

Presented is a multimedia device, including: a display configured to output an image through one or more windows; and a controller configured to control the display, wherein the controller detects whether an activation trigger condition of a picture in picture (PIP) mode is satisfied, and activates the PIP mode when the activation trigger condition is satisfied, wherein the activation trigger condition may be related to a progress state of a game through the multimedia device.

## Description

### TECHNICAL FIELD

The present disclosure relates to a multimedia device and a control method therefor. More specifically, the present disclosure relates to a multimedia device for activating a picture in picture (PIP) mode during game play and outputting video, and a control method therefor.

### BACKGROUND

Recently, in multimedia devices such as a mobile phone and a TV, a new form-factor is being discussed. The form-factor refers to a structured form of a product.

The reason why form-factor innovation is emerging as important in a display industry is because of increasing needs of a user for the form-factor that may be used freely and conveniently regardless of a use situation departing from a typical form-factor customized for a specific use environment in the past, resulted from an increase in consumer mobility, convergence between devices, a rapid progress in smartization, and the like.

For example, vertical TVs are expanding, breaking the stereotype that the TVs are viewed horizontally. The vertical TV is a product that allows the user to change a direction of a screen by reflecting characteristics of the Millennials and Gen Z who are accustomed to enjoying content on mobile. The vertical TVs are convenient because a social media or a shopping site image may be viewed easily and comments may be read while watching videos at the same time. In particular, the advantages of the vertical TV are magnified more when the vertical TV is in association with a smartphone via a near-field communication (NFC)-based mirroring function. When watching regular TV programs or movies, the TV may be switched horizontally.

As another example, a rollable TV and a foldable smartphone are similar to each other in that they both use 'flexible displays'. The flexible display literally means a flexible electronic device. To be flexible, the flexible display must first be thin. A substrate that receives information and converts the same into light must be thin and flexible so that a performance lasts for a long time without damage.

Being flexible means that the flexible display should not be greatly affected even when an impact is applied thereto. While the flexible display is bent or folded, a pressure is continuously applied to a junction. It is necessary to have excellent durability such that the inside is not damaged by such pressure, but also have a property of being easily deformed when the pressure is applied.

The flexible display is implemented based on an OLED, for example. The OLED is a display using an organic light emitting material. the organic material is relatively more flexible than an inorganic material such as a metal. Furthermore, the OLED has a thin substrate and thus is more competitive than other displays. In a case of an LCD substrate used in the past, there is a limit to reducing a thickness because liquid crystal and glass are required separately.

Finally, as a new form-factor for the TV, a demand for a TV that may be easily moved indoors and outdoors is increasing. In particular, because of the recent corona virus epidemic, the time the users stay at home is increasing, and thus, a demand for a second TV is increasing. In addition, because of an increase in population going out for camping or the like, there is a demand for the TV of the new form-factor that may be easily carried and moved.

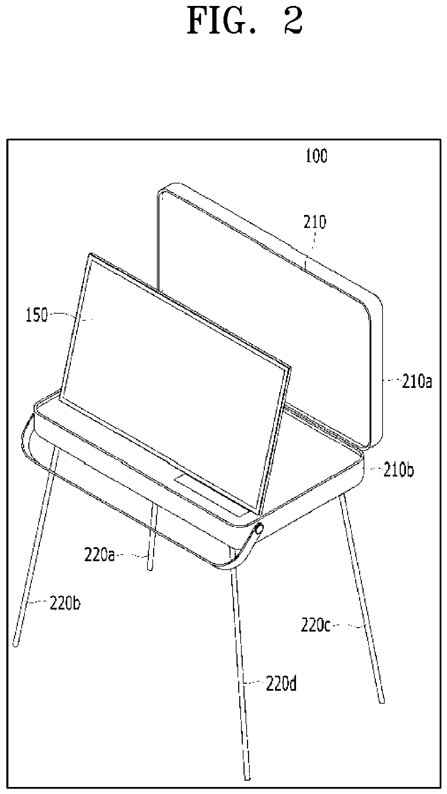

FIG. 2 illustrates an exemplary TV with a new form factor.

The emergence of TVs in various form factors is to improve the user experience, which is intended to provide satisfaction in uninterrupted content consumption and content sharing with others within the home (specific space).

In relation to user experience, services such as cloud games or console games have recently been provided through a TV. Depending on a game environment, a section in which a user does not participate in a game occurs (hereinafter referred to as an "idle section") (that is, a time during which no user operation is required), and a method for utilizing the idle section is being explored.

In particular, recently, short-form videos have become a mainstream form of video content. As the above-described idle section becomes shorter during game play, an attempt to provide such videos to a user is expected to be required for enhancement of user experience.

### DISCLOSURE

### TECHNICAL PROBLEM

The present disclosure is intended to provide a multimedia device for activating a picture in picture (PIP) mode during game play and outputting video, and a control method for the multimedia device.

### TECHNICAL SOLUTION

A multimedia device is provided. The multimedia device includes: a display configured to output a video through one or more windows; and a controller configured to control the display. The controller is configured to detect whether an activation trigger condition of a picture in picture (PIP) mode is satisfied; and activate the PIP mode based on the activation trigger condition being satisfied, and the activation trigger condition may be related to a progress state of a game through the multimedia device.

A method for controlling a multimedia device is provided. The method is performed by the multimedia device including a display configured to output a video through one or more windows and a controller configured to control the display. The method includes: detecting whether a trigger condition for activating a PIP mode is satisfied; and activating the PIP mode based on the trigger condition being satisfied. The trigger condition may be related to a progress state of a game through the multimedia device.

The solutions described above are merely some of embodiments of the present disclosure. Various embodiments in which technical features of the present disclosure are reflected may be derived and understood by a person having ordinary skill in the art based on the detailed description of the present disclosure to be described below.

### ADVANTAGEOUS EFFECTS

The present disclosure provides the following effects.

The present disclosure may activate a picture in picture (PIP) mode for outputting video through a sub-window of a display during game play in a multimedia device.

In addition, the present disclosure may enable output of video through the sub-window during game play by activation of the PIP mode.

In addition, the present disclosure may provide deactivation of the PIP mode.

The effects obtainable from the present disclosure are not limited to the effects described above, and other effects not described above may be clearly understood by a person having ordinary skill in the technical field to which the present disclosure belongs from the description below.

### BRIEF DESCRIPTION OF THE DRAWINGS

The accompanying drawings, which are included as a part of the detailed description to assist understanding of the present disclosure, provide embodiments of the present disclosure and describe the technical idea of the present disclosure together with the detailed description.
FIG. 1 is a block diagram for explaining respective components of a display device.
FIG. 2 is a diagram illustrating a display device according to an embodiment of the present disclosure.
FIG. 3 is a flowchart illustrating a control method of a multimedia device for activation of a picture in picture (PIP) mode according to the present disclosure.
FIG. 4 is a flowchart illustrating a control method of a multimedia device for activation of a PIP mode according to the present disclosure.
FIG. 5 is a diagram for explaining a PIP mode and a multi-view mode according to the present disclosure.
FIG. 6 is a block diagram illustrating a device according to the present disclosure.

### DETAILED DESCRIPTION

Hereinafter, the embodiments disclosed herein will be described in detail with reference to the accompanying drawings, but components that are the same as or similar to each other regardless of reference numerals will be given the same reference numerals, and redundant description thereof will be omitted. The suffixes "module" and "unit" for components used in the following description are given or used together in consideration of ease of writing the present document, and do not have meanings or roles that are distinct from each other by themselves. Further, in describing the embodiments disclosed herein, when it is determined that a detailed description of related known technologies may unnecessarily obscure the gist of the embodiments disclosed herein, detailed description thereof will be omitted. In addition, the attached drawings are provided for easy understanding of the embodiments disclosed herein and do not limit technical idea disclosed herein, and should be construed as including all modifications, equivalents, and alternatives falling within the spirit and scope of the present disclosure.

Although terms including ordinal numbers, such as first, second, and the like, may be used to describe various components, the components are not limited by the terms. The terms are only used to distinguish one component from another.

It should be understood that when a component is referred to as being "connected with" another component, the component may be directly connected with another component or an intervening component may also be present. In contrast, it should be understood that when a component is referred to as being "directly connected with" another component, there is no intervening component present.

A singular representation may include a plural representation unless it represents a definitely different meaning from the context.

The terms "includes" or "has" used herein should be understood as not precluding possibility of existence or addition of one or more other characteristics, figures, steps, operations, constituents, components, or combinations thereof.

In the following descriptions, the term "display device" will be used. However, the term "display device" may refer to various devices such as TVs, multimedia devices, and so on, and thus, the scope of the present disclosure is not limited to specific terminology.

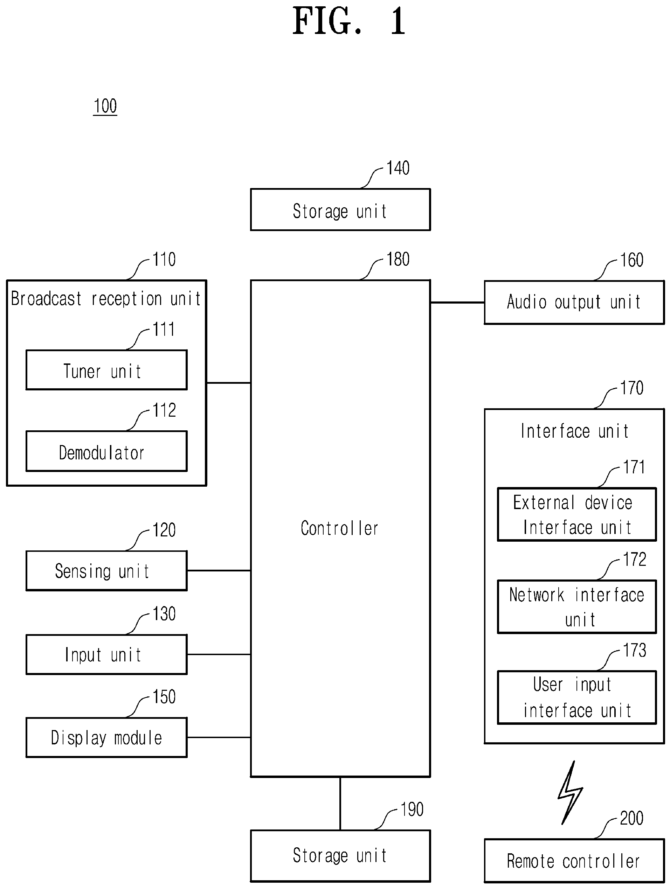

FIG. 1 is a block diagram for illustrating each component of a display device 100 according to an embodiment of the present disclosure.

The display device 100 may include a broadcast receiver 1210, an external device interface 171, a network interface 172, storage 140, a user input interface 173, an input unit 130, and a controller 180, a display module 150, an audio output unit 160, and/or a power supply 190.

The broadcast receiver 1210 may include a tuner 1211 and a demodulator 1212.

Unlike the drawing, the display device 100 may include only the external device interface 171 and the network interface 172 among the broadcast receiver 1210, the external device interface 171, and the network interface 172. That is, the display device 100 may not include the broadcast receiver 1210.

The tuner 1211 may select a broadcast signal corresponding to a channel selected by the user or all pre-stored channels among broadcast signals received via an antenna (not shown) or a cable (not shown). The tuner 1211 may convert the selected broadcast signal into an intermediate-frequency signal or a base band image or audio signal.

For example, when the selected broadcast signal is a digital broadcast signal, the tuner 1211 may convert the digital broadcast signal into a digital IF signal (DIF), and when the selected broadcast signal is an analog broadcast signal, the tuner 1211 may convert the analog broadcast signal into an analog base band image or audio signal (CVBS/SIF). That is, the tuner 1211 may process the digital broadcast signal or the analog broadcast signal. The analog base band image or audio signal (CVBS/SIF) output from the tuner 1211 may be directly input to the controller 180.

In one example, the tuner 1211 may sequentially select broadcast signals of all stored broadcast channels via a channel memory function among the received broadcast signals, and convert the selected signals into the intermediate-frequency signal or the base band image or audio signal.

In one example, the tuner 1211 may include a plurality of tuners to receive broadcast signals of a plurality of channels. Alternatively, the tuner 1211 may be a single tuner that simultaneously receives the broadcast signals of the plurality of channels.

The demodulator 1212 may receive the digital IF signal (DIF) converted by the tuner 1211 and perform a demodulation operation. The demodulator 1212 may output a stream signal (TS) after performing demodulation and channel decoding. In this regard, the stream signal may be a signal in which an image signal, an audio signal, or a data signal is multiplexed.

The stream signal output from the demodulator 1212 may be input to the controller 180. The controller 180 may output an image via the display module 150 and output an audio via the audio output unit 160 after performing demultiplexing, image/audio signal processing, and the like.

A sensing unit 120 refers to a device that senses a change in the display device 100 or an external change. For example, the sensing unit 120 may include at least one of a proximity sensor, an illumination sensor, a touch sensor, an infrared (IR) sensor, an ultrasonic sensor, an optical sensor (e.g., a camera), a voice sensor (e.g., a microphone), a battery gauge, and an environment sensor (e.g., a hygrometer, a thermometer, and the like).

The controller 180 may check a state of the display device 100 based on information collected by the sensing unit 120, and when a problem occurs, the controller 180 may notify the user of the problem or may make adjustments on its own to control the display device 100 to maintain the best state.

In addition, a content, an image quality, a size, and the like of the image provided by the display module 150 may be controlled differently based on a viewer sensed by the sensing unit, a surrounding illumination, or the like to provide an optimal viewing environment. As a smart TV progresses, the number of functions of the display device increases and the number of sensing units 20 also increases together.

The input unit 130 may be disposed at one side of a main body of the display device 100. For example, the input unit 130 may include a touch pad, a physical button, and the like. The input unit 130 may receive various user commands related to an operation of the display device 100 and transmit a control signal corresponding to the input command to the controller 180.

Recently, as a size of a bezel of the display device 100 decreases, the number of display devices 100 in a form in which the input unit 130 in a form of a physical button exposed to the outside is minimized is increasing. Instead, the minimized physical button may be located on a rear surface or a side surface of the display device 100, and a user input may be received from a remote control device 200 via the touch pad or the user input interface 173 to be described later.

The storage 140 may store programs for processing and controlling each signal in the controller 180, or may store signal-processed image, audio, or data signals. For example, the storage 140 may store application programs designed for the purpose of performing various tasks processable by the controller 180, and may selectively provide some of the stored application programs upon request from the controller 180.

The programs stored in the storage 140 are not particularly limited as long as they may be executed by the controller 180. The storage 140 may also perform a function for temporarily storing the image, audio, or data signals received from an external device via the external device interface 171. The storage 140 may store information on a predetermined broadcast channel via the channel memory function such as a channel map.

FIG. 1 shows an embodiment in which the storage 140 is disposed separately from the controller 180, but the scope of the present disclosure is not limited thereto, and the storage 140 is able to be included in the controller 180.

The storage 140 may include at least one of a volatile memory (e.g., a DRAM, a SRAM, a SDRAM, and the like) or a non-volatile memory (e.g., a flash memory, a hard disk drive (HDD), a solid-state drive (SSD), and the like).

The display module 150 may generate a driving signal by converting the image signal, the data signal, an OSD signal, and a control signal processed by the controller 180 or the image signal, the data signal, a control signal, and the like received from the interface 171. The display module 150 may include the display panel 11 having the plurality of pixels.

The plurality of pixels disposed on the display panel may include RGB sub-pixels. Alternatively, the plurality of pixels disposed on the display panel may include RGBW sub-pixels. The display module 150 may generate driving signals for the plurality of pixels by converting the image signal, the data signal, the OSD signal, the control signal, and the like processed by the controller 180.

The display module 150 may be a plasma display panel (PDP), a liquid crystal display (LCD), an organic light emitting diode (OLED), a flexible display module, and the like, or may be a three-dimensional (3D) display module. The 3D display module 150 may be classified into a non-glasses type and a glasses type.

The display device 100 includes the display module that occupies most of the front surface thereof and a casing that covers a rear surface, a side surface, and the like of the display module and packages the display module.

Recently, the display device 100 may use the display module 150 that may be bent such as the light emitting diode (LED) or the organic light emitting diode (OLED) to realize a curved screen in addition to a flat screen.

The LCD, which was mainly used in the past, received light via a backlight unit because it was difficult for the LCD to emit light on its own. The backlight unit is a device that uniformly supplies light supplied from a light source to a liquid crystal located in the front. As the backlight unit became thinner, it was possible to realize a thin LCD, but it was difficult to implement the backlight unit with a flexible material, and when the backlight unit is bent, it was difficult to uniformly supply the light to the liquid crystal, resulting in a change in brightness of the screen.

On the other hand, the LED or the OLED may be implemented to be bendable because each element constituting the pixel emits light on its own and thus the backlight unit is not used. In addition, because each element emits light on its own, even when a positional relationship with a neighboring element changes, brightness thereof is not affected, so that the display module 150 that is bendable using the LED or the OLED may be implemented.

The organic light emitting diode (OLED) panel appeared in earnest in mid-2010 and is rapidly replacing the LCD in a small and medium-sized display market. The OLED is a display made using a self-luminous phenomenon of emitting light when current flows through a fluorescent organic compound. The OLED has a higher image quality response speed than the LCD, so that there is almost no afterimage when realizing a moving image.

The OLED is a light-emitting display product that uses three types (red, green, and blue) of phosphor organic compounds having a self-luminous function, and uses a phenomenon in which electrons and positively charged particles injected from a cathode and an anode are combined with each other within an organic material to emit light by itself, so that there is no need for a backlight (a backlight device) that deteriorates color.

The light emitting diode (LED) panel, as a technology that uses one LED element as one pixel, may reduce a size of the LED element compared to the prior art, and thus, may implement the display module 150 that is bendable. A device referred to as an LED TV in the past only used the LED as the light source for the backlight unit that supplies the light to the LCD, and the LED itself was not able to constitute the screen.

The display module includes the display panel, and a coupling magnet, a first power supply, and a first signal module positioned on a rear surface of the display panel. The display panel may include a plurality of pixels R, G, and B. The plurality of pixels R, G, and B may be formed in respective areas where multiple data lines and multiple gate lines intersect each other. The plurality of pixels R, G, and B may be disposed or arranged in a matrix form.

For example, the plurality of pixels R, G, and B may include a red (hereinafter, 'R') sub-pixel, a green ('G') sub-pixel, and a blue ('B') sub-pixel. The plurality of pixels R, G, and B may further include a white (hereinafter, 'W') sub-pixel.

In the display module 150, a side on which the image is displayed may be referred to as a front side or a front surface. When the display module 150 displays the image, a side on which the image is not able to be observed may be referred to as a rear side or a rear surface.

In one example, the display module 150 may be constructed as the touch screen and may be used as the input device in addition to the output device.

The audio output unit 160 receives an audio-processed signal from the controller 180 and outputs the received signal as the audio.

An interface 170 serves as a passage for various types of external devices connected to the display device 100. The interface may be in a wireless scheme using the antenna as well as a wired scheme of transmitting and receiving data via the cable.

The interface 170 may include at least one of a wired/wireless headset port, an external charger port, a wired/wireless data port, a memory card port, a port for connecting a device having an identification module, an audio input/output (I/O) port, a video input/output (I/O) port, and an earphone port.

An example of the wireless scheme may include the broadcast receiver 1210 described above, and may include not only the broadcast signal, but also a mobile communication signal, a short-distance communication signal, a wireless Internet signal, and the like.

The external device interface 171 may transmit or receive data with a connected external device. To this end, the external device interface 171 may include an A/V input/output unit (not shown).

The external device interface 171 may be connected to the external device such as a digital versatile disk (DVD), a Blu-ray, a game console, a camera, a camcorder, a computer (a laptop), a set-top box, and the like in a wired/wireless manner, and may perform input/output operations with the external device.

In addition, the external device interface 171 may establish a communication network with various remote control devices 200 to receive a control signal related to the operation of the display device 100 from the remote control device 200 or to transmit data related to the operation of the display device 100 to the remote control device 200.

The external device interface 171 may include a wireless communication unit (not shown) for short-range wireless communication with other electronic devices. With such a wireless communication unit (not shown), the external device interface 171 may exchange data with an adjacent mobile terminal. In particular, the external device interface 171 may receive device information, running application information, an application image, and the like from the mobile terminal in a mirroring mode.

The network interface 172 may provide an interface for connecting the display device 100 to a wired/wireless network including an Internet network. For example, the network interface 172 may receive content or data provided by the Internet, a content provider, or a network operator via the network. In one example, the network interface 172 may include a communication module (not shown) for connection to the wired/wireless network.

The external device interface 171 and/or the network interface 172 may include a communication module for the short-range communication such as a wireless fidelity (Wi-Fi), a Bluetooth, a Bluetooth low energy (BLE), a Zigbee, and a near field communication (NFC), a communication module for cellular communication such as a long-term evolution (LTE), an LTE advance (LTE-A), a code division multiple access (CDMA), a wideband CDMA (WCDMA), a universal mobile telecommunications system (UMTS), and a wireless broadband (WiBro), and the like.

The user input interface 173 may transmit a signal input by the user to the controller 180 or transmit a signal from the controller 180 to the user. For example, a user input signal such as power ON/OFF, channel selection, screen setting, and the like may be transmitted/received to/from the remote control device 200, a user input signal input from a local key (not shown) such as a power key, a channel key, a volume key, a setting value, and the like may be transmitted to the controller 180, a user input signal input from a sensor unit (not shown) that senses a gesture of the user may be transmitted to the controller 180, or a signal from the controller 180 may be transmitted to the sensor unit.

The controller 180 may include at least one processor, and may control overall operations of the display device 100 using the processor included therein. In this regard, the processor may be a general processor such as a central processing unit (CPU). In one example, the processor may be a dedicated device such as an ASIC or a processor based on other hardware.

The controller 180 may demultiplex the stream input via the tuner 1211, the demodulator 1212, the external device interface 171, or the network interface 172, or process a demultiplexed signal to generate or output a signal for image or audio output.

The image signal image-processed by the controller 180 may be input to the display module 150 and displayed as an image corresponding to the corresponding image signal. In addition, the image signal image-processed by the controller 180 may be input to an external output device via the external device interface 171.

The audio signal processed by the controller 180 may be output as the audio via the audio output unit 160. In addition, the audio signal processed by the controller 180 may be input to the external output device via the external device interface 171. In addition, the controller 180 may include a demultiplexer, an image processor, and the like.

In addition, the controller 180 may control overall operations within the display device 100. For example, the controller 180 may control the tuner 1211 to select (tune) a broadcast corresponding to the channel selected by the user or the pre-stored channel.

In addition, the controller 180 may control the display device 100 in response to a user command input via the user input interface 173 or by an internal program. In one example, the controller 180 may control the display module 150 to display the image. In this regard, the image displayed on the display module 150 may be a still image or a moving image, and may be a 2D image or a 3D image.

In one example, the controller 180 may allow a predetermined 2D object to be displayed within the image displayed on the display module 150. For example, the object may be at least one of a connected web screen (a newspaper, a magazine, and the like), an electronic program guide (EPG), various menus, a widget, an icon, the still image, the moving image, and a text.

In one example, the controller 180 may modulate and/or demodulate a signal using an amplitude shift keying (ASK) scheme. Here, the amplitude shift keying (ASK) scheme may refer to a scheme of modulating the signal by varying an amplitude of a carrier wave based on a data value or restoring an analog signal to a digital data value based on to the amplitude of the carrier wave.

For example, the controller 180 may modulate the image signal using the amplitude shift keying (ASK) scheme and transmit the modulated image signal via a wireless communication module.

For example, the controller 180 may demodulate and process the image signal received via the wireless communication module using the amplitude shift keying (ASK) scheme.

Therefore, the display device 100 may easily transmit and receive a signal with another image display device disposed adjacent thereto without using a unique identifier such as a media access control address (MAC address) or a complex communication protocol such as TCP/IP.

In one example, the display device 100 may further include a photographing unit (not shown). The photographing unit may photograph the user. The photographing unit may be implemented with one camera, but may not be limited thereto, and may be implemented with a plurality of cameras. In one example, the photographing unit may be embedded in the display device 100 or disposed separately upwardly of the display module 150. Information on the image photographed by the photographing unit may be input to the controller 180.

The controller 180 may recognize a location of the user based on the image photographed by the photographing unit. For example, the controller 180 may identify a distance between the user and the display device 100 (a z-axis coordinate). In addition, the controller 180 may determine an x-axis coordinate and a y-axis coordinate within the display module 150 corresponding to the location of the user.

The controller 180 may sense the gesture of the user based on the image photographed by the photographing unit or the signal sensed by the sensor unit, or a combination thereof.

The power supply 190 may supply the corresponding power throughout the display device 100. In particular, the power may be supplied to the controller 180 that may be implemented in a form of a system on chip (SOC), the display module 150 for displaying the image, the audio output unit 160 for outputting the audio, and the like.

Specifically, the power supply 190 may include a converter (not shown) that converts AC power to DC power and a Dc/Dc converter (not shown) that converts a level of the DC power.

In one example, the power supply 190 serves to receive the power from the outside and distribute the power to each component. The power supply 190 may use a scheme of supplying the AC power in direct connection to an external power source, and may include a power supply 190 that may be charged and used by including a battery.

In a case of the former, the power supply is used in connection with the cable, and has difficulties in moving or is limited in a movement range. In a case of the latter, the movement is free, but a weight and a volume of the power supply increase as much as those of the battery, and the power supply must be directly connected to a power cable for a certain period of time for charging or coupled to a charging cradle (not shown) that supplies the power.

The charging cradle may be connected to the display device via a terminal exposed to the outside, or the built-in battery may be charged using a wireless scheme when approaching the charging cradle.

The remote control device 200 may transmit the user input to the user input interface 173. To this end, the remote control device 200 may use the Bluetooth, a radio frequency (RF) communication, an infrared radiation (IR) communication, an ultra-wideband (UWB), the ZigBee, or the like. In addition, the remote control device 200 may receive the image, audio, or data signal output from the user input interface 173 and display the same thereon or output the same as audio.

In one example, the display device 100 described above may be a fixed or mobile digital broadcast receiver that may receive a digital broadcast.

The block diagram of the display device 100 shown in FIG. 1 is only a block diagram for one embodiment of the present disclosure, and each component of the block diagram is able to be integrated, added, or omitted based on specifications of the display device 100 that is actually implemented.

That is, when necessary, two or more components may be combined to each other into one component, or one component may be subdivided into two or more components. In addition, functions performed in each block are for illustrating the embodiment of the present disclosure, and a specific operation or a device thereof does not limit the scope of rights of the present disclosure.

FIG. 2 is a diagram showing a display device according to an embodiment of the present disclosure. Hereinafter, redundant descriptions duplicate with the above descriptions will be omitted.

Referring to FIG. 2, the display device 100 has the display module 150 accommodated inside a housing 210. In this regard, the housing 210 may include an upper casing 210a and a lower casing 210b, and the upper casing 210a and the lower casing 210b may have a structure of being opened and closed.

In one embodiment, the audio output unit 160 may be included in the upper casing 210a of the display device 100, and the main board that is the controller 180, a power board, the power supply 190, the battery, the interface 170, the sensing unit 120, and the input unit (including the local key) 130 may be accommodated in the lower casing 210b. In this regard, the interface 170 may include a Wi-Fi module, a Bluetooth module, an NFC module, and the like for the communication with the external device, and the sensing unit 120 may include an illuminance sensor and an IR sensor.

In one embodiment, the display module 150 may include a DC-DC board, a sensor, and a low voltage differential signaling (LVDS) conversion board.

In addition, in one embodiment, the display device 100 may further include four detachable legs 220a, 220b, 220c, and 220d. In this regard, the four legs 220a, 220b, 220c, and 220d may be attached to the lower casing 210b to space the display device 100 from the floor.

The display device shown in FIG. 2 is an illustrative example. Display devices to which the present disclosure is applicable include not only display devices with new form factors but also display devices with existing form factors including conventional flat-screen TVs.

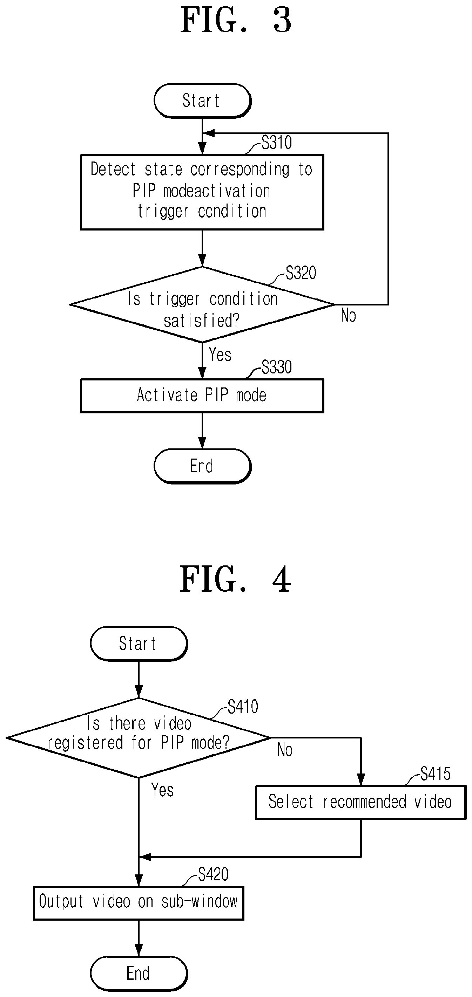

Hereinafter, the proposed technology will be described with reference to FIGS. 3 to 6.

FIG. 3 is a flowchart illustrating a control method of a multimedia device for activation of a picture in picture (PIP) mode according to the present disclosure. The control method related to FIG. 3 may be performed by a multimedia device 100 or a control unit 180 of the multimedia device 100 (hereinafter referred to as a "controller"), and may also be performed by other components of the multimedia device 100. Hereinafter, for convenience of description, the control method will be described as being performed by the multimedia device 100.

The multimedia device 100 may detect a state corresponding to an activation trigger condition of the PIP mode (S310).

The multimedia device 100 may determine whether the activation trigger condition of the PIP mode is satisfied (S320).

The activation trigger condition of the PIP mode may be configured to be related to a progress state of a game through the multimedia device 100. For example, the activation trigger condition of the PIP mode may include a case in which the progress state of the game is stopped or a case in which a user is required to wait for a predetermined time according to the progress state of the game.

In addition, the activation trigger condition of the PIP mode may include detection of a predefined operation or input by a user through a user input interface. Activation of the PIP mode caused by the detection of the operation or input through the user input interface is maintained until deactivation of the PIP mode caused by detection of an operation or input through the user input interface is performed. That is, the progress state of the game is resumed only when the trigger condition for deactivation of the PIP mode is satisfied.

Thus, a time section from a time point at which the progress state of the game is stopped or a user starts waiting to a time point at which the game is resumed may be referred to as an "idle section." That is, the activation trigger condition of the PIP mode relates to whether the progress state of the game corresponds to the idle section.

As described above, trigger conditions for starting the "idle section" are various. Such trigger conditions may be stored in a storage unit 140 of the multimedia device 100 (hereinafter referred to as a "memory"), and when the trigger conditions are satisfied, the multimedia device 100 may activate the PIP mode.

Table 1 below illustrates activation trigger conditions of the PIP mode stored in the memory of the multimedia device 100. The activation trigger conditions of the PIP mode may be configured by combining two or more conditions, such as conditions 4 to 7 of Table 1. In addition to the activation trigger conditions of the PIP mode listed in Table 1, other trigger conditions may be used.

**[Table 1]**

| No. | Activation trigger conditions of the PIP mode | Detailed description |
|---|---|---|
| 1 | A | A case corresponding to a waiting time for game respawn |
| 2 | B | A case in which a gyroscope sensor value (or a change of the value) of a game controller falls within a predetermined range |
| 3 | C | A case in which a predefined input or operation is performed through a user input interface |
| 4 | A+B | |
| 5 | A+C | Even when a predefined input or operation is performed through a user input interface, the PIP mode is activated only when condition A is satisfied |
| 6 | B+C | Even when a predefined input or operation is performed through a user input interface, the PIP mode is activated only when condition B is satisfied |
| 7 | A+B+C | Even when a predefined input or operation is performed through a user input interface, the PIP mode is activated only when conditions A and B are satisfied |

With reference to condition A, respawn refers to a term indicating a phenomenon in which a character or a monster in a game is redeployed at a predetermined location after the character or the monster dies or disappears. That is, the "idle section" occurs according to respawn, and when respawn occurs, the PIP mode may be activated.

With reference to condition B, it is possible to detect vertical movement of a game controller by using a measured value of a gyroscope sensor included in the game controller. Accordingly, it is possible to detect whether a user places the game controller on a table or a floor, or lifts the game controller.

Accordingly, when a gyroscope sensor value corresponding to placing downward (a value range or a change of the value) is obtained, the multimedia device 100 may activate the PIP mode. As a result, a sub-window and video may be output on the display 150. When a gyroscope sensor value corresponding to lifting upward (a value range or a change of the value) is obtained, the multimedia device 100 may deactivate the PIP mode. As a result, the sub-window and the video may disappear from the display 150.

As another embodiment, the activation trigger conditions of the PIP mode may be configured to include a case in which at least one of condition A, B, or C is satisfied, unlike Table 1.

When the activation trigger condition of the PIP mode is satisfied, the multimedia device 100 may activate the PIP mode (S330).

The activated PIP mode may be deactivated again when a deactivation trigger condition of the PIP mode is satisfied. Here, the deactivation trigger condition of the PIP mode may be configured differently according to the activation trigger of the PIP mode. That is, when the activation trigger condition of the PIP mode is condition A, the deactivation trigger condition of the PIP mode is configured as condition A' (condition "D" of Table 2 below).

Deactivation trigger conditions of the PIP mode are various. Such trigger conditions may be stored in the storage unit 140 of the multimedia device 100 (hereinafter referred to as a "memory"), and when the trigger conditions are satisfied, the multimedia device 100 may deactivate the PIP mode.

Table 2 below illustrates deactivation trigger conditions of the PIP mode stored in the memory of the multimedia device 100. The deactivation trigger conditions of the PIP mode may be configured by combining two or more conditions, such as conditions 4 to 7 of Table 2. In addition to the activation trigger conditions of the PIP mode listed in Table 1, other trigger conditions may be used.

Deactivation trigger conditions D, E, and F of the PIP mode in Table 2 are configured to relate to activation trigger conditions A, B, and C of the PIP mode in Table 1, respectively.

**[Table 2]**

| No. | Deactivation trigger conditions of the PIP mode | Detailed description |
|---|---|---|
| 1 | D | A case in which a waiting time for game respawn has elapsed |
| 2 | E | A case in which a gyroscope sensor value (or a change of the value) of a game controller falls within a predetermined range |
| 3 | F | A case in which a predetermined input or operation is performed through a user input interface |
| 4 | D+E | |
| 5 | D+F | Even when a predetermined input or operation is performed through a user input interface (condition F is satisfied), the PIP mode is activated only when condition D is satisfied |
| 6 | E+F | Even when a predetermined input or operation is performed through the user input interface (condition F is satisfied), the PIP mode is activated only when condition E is satisfied |
| 7 | D+E+F | Even when a predetermined input or operation is performed through the user input interface (condition F is satisfied), the PIP mode is activated only when both conditions A and B are satisfied |

As another embodiment, the deactivation trigger conditions of the PIP mode may be configured to include a case in which at least one of condition D, E, or F is satisfied, unlike Table 2.

As the PIP mode is activated, the multimedia device 100 may control output of video on a sub-window on the display 150 of the multimedia device 100. FIG. 4 is a flowchart illustrating a control method of a multimedia device for activation of a PIP mode according to the present disclosure. The present disclosure will be described with reference to FIG. 4.

More specifically, the multimedia device 100 may determine whether there is video registered for the PIP mode (S410).

When there is a video registered in advance, the multimedia device 100 may control output of the registered video on the sub-window (S420).

When there is no video registered in advance, the multimedia device 100 may select a recommended video (S415).

As an example, the multimedia device 100 may select one or more recommended videos and present the selected videos to a user to allow selection of one video among the one or more recommended videos. As another example, the multimedia device 100 may select a recommended video, and selection of the recommended video may be based on viewing history of a user (or video output history of the multimedia device 100) or information related to a corresponding game. For example, a video having the highest frequency or the most recently played video may be selected as the recommended video.

As another example, the multimedia device 100 may select a recommended video, and selection of the recommended video may be based on information related to the progress state of the game. For example, in the case of a cloud game, metadata related to the progress state of the game may be shared between a game server and a client (i.e., the multimedia device 100). That is, the metadata may indicate the "idle section" described above, and accordingly, a video to be output on the sub-window may be selected. In addition, a video having a length corresponding to the time duration of the "idle section" may be selected.

In addition, the multimedia device 100 may acquire age information based on user information in selecting a recommended video and filter video according to the acquired age information. For example, the user information may correspond to account information connected to the multimedia device 100 or the game server. The multimedia device 100 may exclude video not suitable for the acquired age information from the recommended video.

When metadata related to the progress state of the game is shared between the game server and the multimedia device 100, the multimedia device 100 may detect whether the activation trigger condition of the PIP mode is satisfied based on the metadata. For example, when the metadata is capable of indicating condition A of Table 1, the multimedia device 100 may detect whether condition A is satisfied based on the received metadata. In addition, when the metadata is used as the activation trigger condition of the PIP mode, a trigger condition for deactivation of the PIP mode may also be based on the metadata. When the metadata is capable of indicating condition D of Table 2 (a condition related to condition A of Table 1), the multimedia device 100 may detect whether condition D is satisfied based on the received metadata.

In addition, video output on the sub-window may be related to the game. For example, the video output on the sub-window may include a video describing a strategy for the game, a video describing a character of the game, or the like.

The multimedia device 100 may monitor whether a time during which the PIP mode is activated exceeds a predetermined duration. When the time during which the PIP mode is activated exceeds the predetermined duration, the multimedia device 100 may control output of video on a main window of the display 150 instead of the sub-window. In this case, the multimedia device 100 may terminate the ongoing game.

Alternatively, when the time during which the PIP mode is activated exceeds the predetermined duration, the multimedia device 100 may control output of video on one of multi-view mode windows of the display 150 instead of the sub-window.

Alternatively, when the time during which the PIP mode is activated exceeds the predetermined duration, the multimedia device 100 may output video being output on the sub-window through another application. In this case, the multimedia device 100 may terminate the ongoing game.

Alternatively, when the time during which the PIP mode is activated exceeds the predetermined duration, the multimedia device 100 may output a user interface for querying a user whether to continue video output through the sub-window on the display 150. When continuation or termination of the video output by the user is detected through the user interface, the multimedia device 100 may continue or terminate the video output on the sub-window. When the video output on the sub-window is terminated, the multimedia device 100 may not display the sub-window on the display 150.

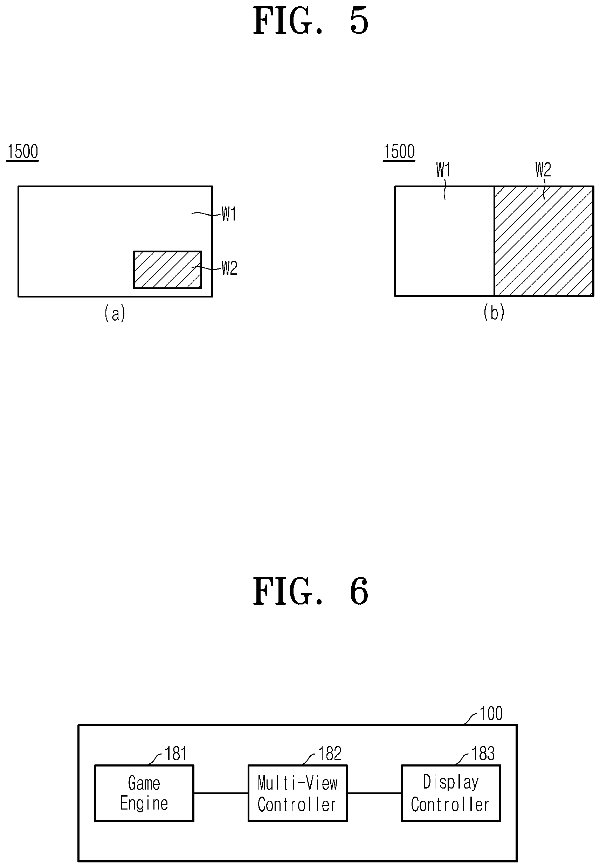

FIG. 5 is a diagram for explaining a PIP mode and a multi-view mode according to the present disclosure.

FIG. 5(a) illustrates the PIP mode, in which a main window V1 and a sub-window V2 are output or displayed on a display screen 1500. The position of the sub-window V2 is merely an example, and the sub-window V2 is displayed as being popped up on the main window V1 on the display screen 1500.

FIG. 5(b) illustrates the multi-view mode, in which the main window V1 and the sub-window V2 are output or displayed on the display screen 1500. Although the display screen 1500 is illustrated as being divided into two sections, the display screen 1500 may be divided into more sections.

FIG. 6 is a block diagram illustrating a device according to the present disclosure. The multimedia device 100 may include a game engine 181, a multi-view controller 182, and a display controller 183.

The game engine 181 may check an operation status and a connection status of a game console device.

The game engine 181 may determine whether to activate a PIP mode by checking a progress state of a game (for example, respawn) according to the operation state of the game console device. When the PIP mode is to be activated, the game engine 181 may request the multi-view controller 182 to output a PIP screen. Accordingly, the multi-view controller 182 may request N (for example, 2) screens from the display controller 183. The display controller 183 may output a registered video or a recommended video on at least one of the N screens.

In this case, a user may select a display output mode, and the display output mode may include a sub-window pop-up mode, a multi-view mode, and the like as described above.

In another aspect of the present disclosure, the above-described proposals or operations may be provided as code that is capable of being implemented, performed, or executed by computers (herein, the computer is a comprehensive concept including a system on chip (SoC), a processor, a microprocessor etc.) or a computer-readable storage medium or computer program product storing or including the code. The scope of the present disclosure may be extended to the code or the computer-readable storage medium or computer program product storing or including the code.

The preferred embodiments of the present disclosure are provided to allow those skilled in the art to implement and embody the present disclosure. While the present disclosure has been described and illustrated herein with reference to the preferred embodiments thereof, it is understood to those skilled in the art that various modifications and variations could be made therein without departing from the scope of the disclosure. Therefore, the present disclosure is not limited to the embodiments disclosed herein but intends to give the broadest scope consistent with the new principles and features disclosed herein.

## Claims

1. A multimedia device, comprising:
a display configured to output a video through one or more windows; and
a controller configured to control the display,
wherein the controller is configured to:
detect whether an activation trigger condition of a picture in picture (PIP) mode is satisfied; and
activate the PIP mode based on the activation trigger condition being satisfied,
wherein the activation trigger condition is related to a progress state of a game through the multimedia device.

2. The multimedia device of claim 1, wherein the controller is configured to:
detect whether a deactivation trigger condition of the PIP mode is satisfied; and
deactivate the PIP mode based on the deactivation trigger condition being satisfied,
wherein the deactivation trigger condition is configured differently according to the activation trigger condition.

3. The multimedia device of claim 1, wherein the controller is configured to control a video to be output on a sub-window on the display based on activation of the PIP mode.

4. The multimedia device of claim 3, wherein the output video on the sub-window is a video related to the game.

5. The multimedia device of claim 3, wherein, based on a time during which the PIP mode is activated exceeding a predetermined duration, the controller is configured to control the video to be output on a main window of the display or a multi-view mode window of the display instead of the sub-window.

6. The multimedia device of claim 3, wherein, based on a time during which the PIP mode is activated exceeding a predetermined duration, the controller is configured to output a user interface for querying whether to continue outputting the video through the sub-window.

7. The multimedia device of claim 3, wherein the controller is configured to:
acquire viewing history; and
select the video to be output on the sub-window based on the acquired viewing history.

8. The multimedia device of claim 3, wherein the controller is configured to:
acquire information related to the progress state of the game; and
select the video to be output on the sub-window based on the acquired information.

9. A method for controlling a multimedia device, the method being performed by the multimedia device comprising a display configured to output a video through one or more windows and a controller configured to control the display, the method comprising:
detecting whether a trigger condition for activating a picture in picture (PIP) mode is satisfied; and
activating the PIP mode based on the trigger condition being satisfied,
wherein the trigger condition is related to a progress state of a game through the multimedia device.

10. The method of claim 9, comprising:
detecting whether a deactivation trigger condition of the PIP mode is satisfied; and
deactivating the PIP mode based on the deactivation trigger condition being satisfied,
wherein the deactivation trigger condition is configured differently according to the activation trigger condition.

11. The method of claim 9, further comprising controlling a video to be output on a sub-window on the display based on activation of the PIP mode.

12. The method of claim 11, wherein the output video on the sub-window is a video related to the game.

13. The method of claim 11, further comprising, based on a time during which the PIP mode is activated exceeding a predetermined duration, controlling the video to be output on a main window of the display or a multi-view mode window of the display instead of the sub-window.

14. The method of claim 11, further comprising:
acquiring viewing history; and
selecting the video to be output on the sub-window based on the acquired viewing history.

15. The method of claim 9, further comprising:
acquiring information related to the progress state of the game; and
selecting the video to be output on the sub-window based on the acquired information.
